# EUROPEAN PATENT APPLICATION

(11) **EP 4 600 547 A1**
(43) Date of publication of application: **13.08.2025**
(21) Application number: 24156216.4
(22) Date of filing: 07.02.2024
(51) Int. Cl.: F21V 8/00, B60Q 3/64, D03D 15/547

(54) **A LIGHT DISPENSING APPARATUS**

(71) Applicant: Motherson Innovations Company Ltd., London EC2N 2AX (GB)
(72) Inventor: Nogaret, Eric, 68600 Biesheim (FR); Buchet, Yann, 67000 Strasbourg (FR); Pignard, Pierre, 68320 Jebsheim (FR); Sehn, Fabian, 79100 Freiburg (DE); Dreyer, Xavier, 67100 Strasbourg (FR); Kolbe, Alena, 79285 Ebringen (DE); Willaredt, Bastian, 79312 Emmendingen (DE); Friderich, Alicia, 79369 Wyhl (DE)
(74) Representative: Westphal, Mussgnug & Partner Patentanwälte mbB

(57) **Abstract**

The present disclosure is directed towards a light dispending apparatus (200, 300) comprising a primary layer of fabric having at least one support surface (202, 302); an optical fiber ribbon including a plurality of optical fibers (204, 304, 400a, 400b) extending along the optical fiber ribbon and a secondary protective layer (206, 306). The plurality of optical fibers (204, 304, 400a, 400b) is weaved onto the primary layer of woven fabric having at least one support surface (202, 302) and wherein the at least one of the support surfaces (202,302) of the primary layer of fabric is surrounded with the secondary protective layer (206, 306) .

## Description

The present disclosure relates to light dispensing apparatus for automobiles interior. Moreover, the present disclosure relates to light dispensing apparatus comprising a protective layer to prevent damage of optical fibers from dust particles.

In modern vehicles, the interiors are often lit by one or more light fixtures. Such light fixtures are used for interior illumination which includes a light dispensing apparatus having plurality of optical fibers that are weaved onto the layer of woven fabric. Conventionally, the optical fibers of the light dispensing apparatus are exposed to various external factors such as mechanical strain, high pressure, and dust particles during the activation process of the optical fibers where the activation process damages the outer layer of the optical fibers, thereby impairing light emission and/or an optical appearance due to which the distribution of the emitted light can in particular become inhomogeneous.

Therefore, there is felt a need of a light dispensing apparatus that alleviates the aforementioned drawbacks of the conventional light dispensing apparatus.

JP2006065000A discloses a photosensitive composition for sandblast resist where a cushion layer is provided between a supporting member and a photosensitive layer and a barrier layer is present between the cushion layer and the photosensitive layer. The protective layer of this composition is however peeled off once the heating and pressure is applied, thereby making it susceptible to damage through pollutants.

It is an object of the present disclosure to provide a light dispensing apparatus by which the drawbacks as mentioned above can be eliminated or at least reduced. In particular, it is one task to provide a light dispensing apparatus that reduces the use of multiple layers over the woven fabric. It is also an object of the present disclosure to provide a light dispensing apparatus which has simple and reliable components and is cost effective. Moreover, the present disclosure has the object to prevent damage of the optical fibers weaved onto to the light dispensing apparatus.

The objects are achieved by the features specified in claim 1. Advantageous embodiments are the subject of the dependent claims.

The term "vehicle" denotes any motor driven vehicle with or without trailers driven be a driver, where the driver requires information about persons, other vehicles, or objects in the (near) surrounding of the vehicle to be able to drive safety. As an example, vehicles are cars, trucks, tractors, or trailers.

The term "primary layer" denotes a base layer of woven fabric of the interior of the vehicle. The plurality of optical fibers are weaved onto the primary layer of woven fabric before the activation of the plurality of optical fibers.

The term "protective layer" denotes a material which can be easily deformed while applying pressure and speed.

According to one embodiment of the present disclosure, a light dispensing apparatus for a vehicle comprising:
- a primary layer of woven fabric having at least one support surface;
- an optical fiber ribbon including a plurality of optical fibers extending along the optical fiber ribbon; and
- a secondary protective layer,
wherein the plurality of optical fibers is weaved onto the primary layer of woven fabric, and wherein at least one of the support surfaces of the primary layer of woven fabric is surrounded with the secondary protective layer.

According to the present disclosure, the plurality of optical fibers includes a core and a cladding. The core is made from a light transmitting material and has an axis in the direction of light flow through the plurality of optical fibers. The cladding surrounds the core and has an index of refraction that is less than the index of refraction of the core. The protective layer is applied over the primary layer of woven fabric having at least one support surface including the plurality of optical fibers such that the thickness of the protective layer is in the range of 4 microns to 200 microns. More preferably, the thickness of the secondary protective layer is in the range of 7 microns to 80 microns.

The advantage of the present disclosure is that the thickness of the protective layer is kept minimum, thereby making the protective layer stretchable, so that at the time of activation process of the plurality of optical fibers, the protective layer gets deformed which enables activation of the plurality of optical fibers through the secondary protective layer. Another advantage of the present disclosure is that there is no need to remove the secondary protective layer after the activation process of the plurality of the optical fibers. Thus, the light dispensing apparatus of the present disclosure is easy to obtain, reliable and cost effective. With the application of secondary protective layer, damage to the optical fibers can thus be avoided and surface of the plurality of optical fibers can be protected.

In an embodiment, to achieve the desired deformation of the secondary protective layer, the stretchability of the secondary protective layer is in the range of 0 - 300%. More preferably, the stretchability of the secondary protective layer is in the range of 10 - 150%. The plurality of optical fibers can furthermore be optically connected to at least one of the at least one light sources. The plurality of optical fibers can include at least 2 optical fibers, preferably at least 10 optical fibers. The plurality of optical fibers can be arranged in a cylindrical form.

Provision can in particular be made that at least one optical fiber is optically connected to the at least one light source. In other embodiments, two optical fibers are optically connected to two light sources. The plurality of optical fiber can further be optically connected to a plurality of light sources, with each respective optical fiber only being optically connected to one light source. A number of light sources can thereby be minimized.

The secondary protective layer can in particular at least partially cover at least one support surface of the woven fabric. Physical damage to the optical fibers can thereby be prevented. The secondary protective layer can be configured as a decorative layer that has appealing haptics and/or an appealing pattern. Particularly, the woven fabric can be configured as background lighting for the second protective layer.

The form of the secondary protective layer is not particularly limited and can be appropriately selected according to the purpose. Examples include a mode in which the secondary supporting layer is provided on the supporting body. Note that the secondary protective layer may be a single layer or may be a plurality of layers.

The secondary protective layer can furthermore be produced from a flexible material. A flexible material increases the design freedoms on the installation, positioning, and use of the light dispensing apparatus. The secondary protective layer can, for example, be connected to the woven fabric by a spray coating processing. In another embodiment, the secondary protective layer includes textile fibers to provide the vehicle interior trim part with a textile appearance. Textile fibers are a particularly well-suited flexible material. The textile fibers preferably comprise a synthetic material such as polypropylene, polyamide, polyethylene, and/or polyester. Natural fibers such as animal wools, cotton, and/or hemp can also be used as textile fibers.

In an aspect of the present disclosure, material of the secondary protective layer can be selected from but not limited to thermoplastic polyurethane (TPU), thermoplastic elastomer (TPE), polyethylene terephthalate (PET) and polyvinyl chloride (PVC) .

The woven fabric can be a Jacquard textile and/or a maille textile and/or an ottoman textile. A textile can be understood as a Jacquard textile or a maille textile or an ottoman textile that was manufactured by a Jacquard patterning or a maille patterning or an ottoman patterning. The Jacquard, maille, and/or ottoman textile can have more than two differently colored fibers, preferably more than four differently colored fibers. Particularly appealing weaving patterns can thereby be achieved. The Jacquard textile can in particular be knitted, stitched, and/or crocheted.

Another aspect of the present disclosure is directed towards a process of obtaining the light dispensing apparatus. The method comprises the steps of placing a primary layer of woven fabric having at least one support surface; disposing a secondary protective layer onto the at least one support surface of the primary layer of woven fabric; and pressing to form the light dispensing apparatus.

In an aspect of the present disclosure, the pressing step includes Hand lamination, press lamination, roll-to-roll lamination. The hand lamination is carried out at a room temperature and press lamination is carried out at a temperature in in the range of 50°C to 100°C.

In an aspect of the present disclosure, the activation process comprises but not limited to sandblasting, plastic pellets blasting, dry ice blasting, and soda blasting.

The present disclosure is described in detail with reference to the drawings attached wherein:
Figure 1 illustrates a conventional light dispensing apparatus without the protective layer;
Figure 2 illustrates a light dispensing apparatus according to an embodiment of the present disclosure;
Figure 3 illustrates a light dispensing apparatus according to another embodiment of the present disclosure;
Figure 4 illustrates perspective view of an optical fiber, according to another embodiment of the present disclosure.

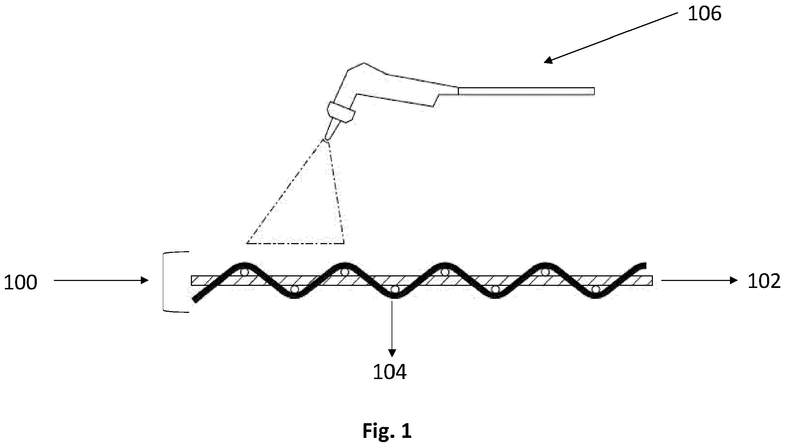

Figure 1 shows a conventional light dispensing apparatus 100. The light dispensing apparatus 100 comprises layer of woven fabric having at least one support surface 102 and a plurality of optical fibers 104 weaved onto the layer of woven fabric 102. When the activation process of the plurality of optical fiber 104 is carried out using an activation device 106 at a desired surface of the primary layer of woven fabric, the plurality of optical fibers 104 gets activated at the target area. However, the light dispensing apparatus 100 experience micro-damage over the plurality of optical fibers 104.

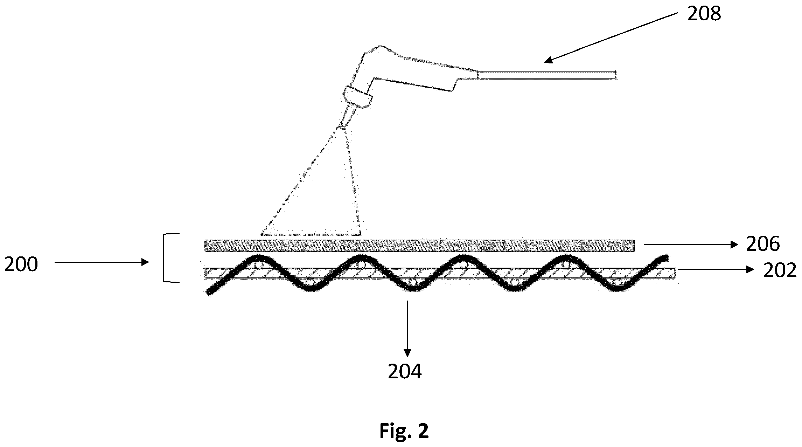

Figure 2 shows a light dispensing apparatus 200 along with an activation device 208. The light dispensing apparatus 200 comprises a primary layer of woven fabric having at least one support surface 202, a plurality of optical fibers 204 extending along the optical fiber ribbon and a secondary protective layer 206. The plurality of optical fibers 204 are weaved onto the primary layer of woven fabric and the primary layer of woven fabric is surrounded with the secondary protective layer 206.

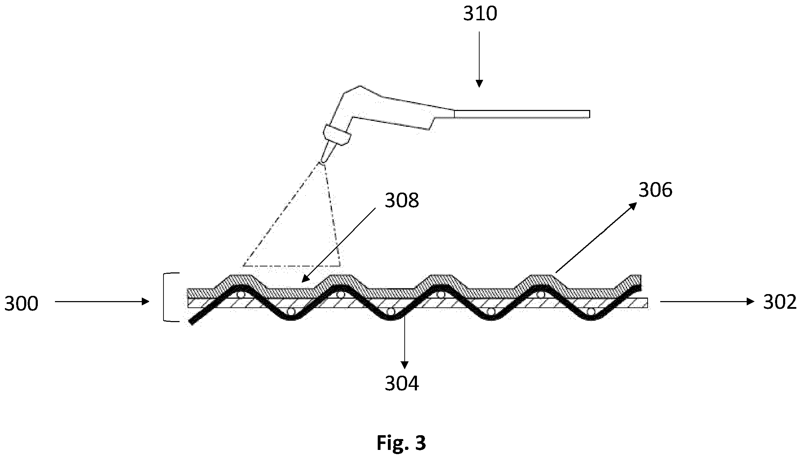

Figure 3 shows a light dispensing apparatus 300 along with an activation apparatus 310. The light dispensing apparatus 300 comprises a primary layer of woven fabric having at least one support surface 302, a plurality of optical fibers 304 extending along the optical fiber ribbon and a secondary protective layer 306. During the activation of the process of the plurality of optical fibers 304 weaved onto the primary layer of woven fabric having at least one support surface 302, the secondary protective layer gets deformed having a deformed region 308 when high pressure is applied to the primary layer of woven fabric having at least one support surface 302 as can be seen in Figure 3.

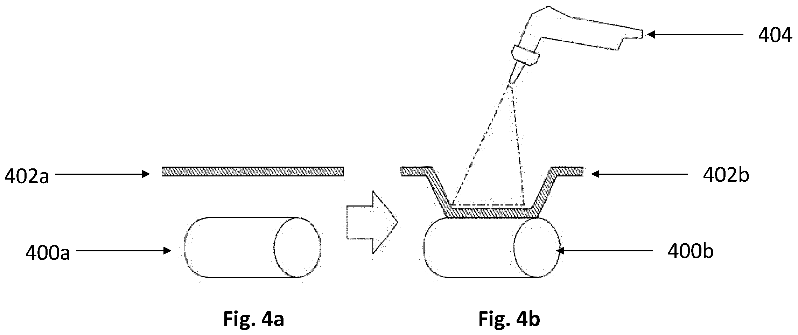

Figure 4a and 4b show optical fibers 400a and 400b. Figure 4a illustrates the optical fiber 400a having a layer of protective layer 402a with smooth appearance before the activation process. Figure 4b illustrates the optical fiber 400b, where the layer of protective layer 402b gets deformed during the activation process. The deformed layer of protective layer 400b by an activation device 404 ensures the optical fiber 400b is not damaged due to activation process by preventing dust particle and other pollutants to get trapped into the surface of the plurality of optical fibers 400a, 400b.

Embodiment of the present disclosure also discloses a vehicle comprising the light dispensing apparatus 200, 300.

Although the subject matter of the present disclosure has been described in language specific to structural features and/or acts, it is to be understood that the subject matter defined in the appended claims is not necessarily limited to the specific features or acts described above. Rather, the specific features and acts described above are disclosed as examples of implementing the claims and other equivalent features and acts are intended to be within the scope of the claims, i.e., the features disclosed in the foregoing description, the claims, and the drawings may be essential, both individually and in any combination, for accomplishing the present disclosure in its various embodiments. The embodiments shown herein are only examples of the present disclosure and must therefore not be understood as being restrictive. Alternative embodiments considered by the skilled person are equally covered by the scope of protection of the present disclosure.

### Reference list:

- 100: Light dispensing apparatus of prior art
- 102: Woven fabric with at least one support surface of prior art
- 104: Plurality of optical fibers of prior art
- 200: Light dispensing apparatus according to one embodiment
- 202: woven fabric having at least one support surface
- 204: Plurality of optical fibers
- 206: Secondary protective layer
- 300: Light dispensing apparatus according to another embodiment
- 302: woven fabric having at least one support surface
- 304: Plurality of optical fibers
- 306: Secondary protective layer
- 308: Deformed region of secondary protective layer
- 400a: Optical fibers with secondary protective layer
- 400b: optical fibers with deformed secondary protective layer

## Claims

1. A light dispending apparatus (200, 300) comprising a primary layer of fabric having at least one support surface (202, 302), an optical fiber ribbon including a plurality of optical fibers (204, 304, 400a, 400b) extending along the optical fiber ribbon and a secondary protective layer (206, 306), wherein the plurality of optical fibers (204, 304, 400a, 400b) is weaved onto the primary layer of woven fabric having at least one support surface (202, 302) and wherein the at least one support surface (202, 302) of the primary layer of fabric is surrounded with the secondary protective layer (206, 306).

2. The apparatus as claimed in claim 1, wherein the plurality of optical fibers (204, 304, 400a, 400b) comprises a core of light transmitting material and a cladding surrounding the core.

3. The apparatus as claimed in claim 1, wherein thickness of the secondary protective layer (206, 306) is in the range of 4 microns to 200 microns and more preferably in the range of 7 microns to 80 microns.

4. The apparatus as claimed in claim 1, wherein the secondary protective layer (206, 306) is stretchable during activation of the plurality of optical fibers (204, 304, 400a, 400b).

5. The apparatus as claimed in claim 1, wherein the stretchability of the secondary protective layer is in the range of 0-300% and more preferably in the range of 10-150%.

6. The apparatus as claimed in claim 1, wherein material of the secondary protective layer (206, 306) is selected from but not limited to thermoplastic polyurethane (TPU), thermoplastic elastomer (TPE), polyethylene terephthalate (PET) and polyvinyl chloride (PVC).

7. A method of obtaining a light dispensing apparatus (200, 300), the method comprising the steps of:
placing a primary layer of woven fabric having at least one support surface (202, 302);
disposing a secondary protective layer (206, 306) onto the at least one support surface (202, 302) of the woven fabric; and
pressing to form the light emitting apparatus,
wherein the plurality of optical fibers (204, 304, 400a, 400b) is weaved onto the at least one support surface of the woven fabric, and wherein the secondary protective layer (206, 306) is positioned between the primary layer of woven fabric with the at least one support surface (202, 302) and an activation device during the activation process.

8. The method as claimed in claim 7, wherein the activation process includes but not limited to sandblasting, plastic pellets blasting, dry ice blasting and soda blasting.

9. The method as claimed in claim 7, wherein the secondary protective layer (206, 306) is stretchable, allowing the layer to be deformed during activation of the plurality of optical fiber (204, 304, 400a, 400b).

10. The method as claimed in claim 9, wherein the stretchability of the secondary protective layer is in the range of 0-300% and more preferably in the range of 10-150%.

11. The method as claimed in claim 7, wherein the pressing step comprises but not limited to hand lamination, roll to roll lamination and press lamination.

12. The method as claimed in claim 11, wherein the hand lamination is carried out at room temperature and the press lamination at a temperature in the range of 50 degrees to 100 degrees.

13. A vehicle with at least one light dispensing apparatus (200, 300) according to one of claims 1 to 6.
